# EUROPÄISCHE PATENTANMELDUNG

(11) **EP 1 400 706 A1**
(43) Veröffentlichungstag der Anmeldung: **24.03.2004**
(21) Anmeldenummer: 03019094.6
(22) Anmeldetag: 22.08.2003
(51) Int. Cl.: F16B 21/04

(54) **Vorrichtung zum lösbaren Befestigen eines Motors an einem Förderer**

(30) Priorität: 20.09.2002 DE 10243920
(71) Anmelder: SIEMENS AKTIENGESELLSCHAFT, 80333 München (DE)
(72) Erfinder: Brixius, Wolfgang, 91077 Neunkirchen A.Br (DE); Gräfer, Dominik, 90427 Nürnberg (DE); Hoene, Albrecht, Dr., 91074 Herzogenaurach (DE)

(57) **Zusammenfassung**

Die Erfindung betrifft eine Vorrichtung zum lösbaren Befestigen eines Motors (1) an einem Anschlusselement (4) eines Förderers, insbesondere eines Antriebsmotors, umfassend Befestigungsmittel, mittels derer der Motor (1) abtriebsseitig am Anschlusselement (4) befestigt ist. Um eine Verkürzung von Ausfallzeiten eines Förderers zu erzielen, wird vorgeschlagen, das die Befestigungsmittel zwei nach Art eines Bajonettverschlusses (7) lösbar miteinander verbindbare jeweils eine Durchgangsöffnung(11) aufweisende Verbindungselemente (2, 3) umfassen, von denen eines an der Stirnseite des Motors (13) und das andere am Anschlusselement (4) befestigt ist, wobei die Motorwelle (6) bei den durch Verdrehen und/oder Verschieben miteinander verbundenen Verbindungselementen (2, 3) durch die beiden Durchgangsöffnungen (11) hindurch verläuft, und dass die beiden Verbindungselemente (2, 3) gegen Lösen gesichert sind.

## Beschreibung

Die Erfindung betrifft eine Vorrichtung zum lösbaren Befestigen eines Motors, insbesondere eines Antriebsmotors, an einem Förderer gemäß dem Oberbegriff des Anspruchs 1.

Es ist bekannt, dass Förderer zum Antrieb Elektromotoren aufweisen. Der Motor wird dabei meist stirnseitig an einen Anschlussflansch des Rahmengestells des Förderers als Anschlusselement mittels mehrerer Schrauben befestigt. Die Motorwelle des Motors tritt stirnseitig aus, verläuft durch eine am Anschlussflansch zentrisch angeordnete Öffnung und ist dann mit einer Antriebswelle verbunden. Während des Betriebs des Förderers treibt der Motor die Antriebswelle an, die wiederum die Rotationsbewegung über ein Getriebe an die Fördereinrichtung weiterleitet.

Zur Demontage z.B. eines defekten Motors wird dieser elektrisch abgeklemmt und von der Antriebswelle getrennt. Anschließend werden die Schrauben, die den Motor mit dem Anschlussflansch verbinden, gelöst. Zur Montage eines neuen Motors werden diese Arbeitsschritte in umgekehrter Reihenfolge durchgeführt.

Nachteilig ist dabei das zeitaufwändige Lösen und Befestigen des Motors, was mit einer Ausfallzeit des Förderers verbunden ist.

Weiter sind aus der DE 20 120 157 U1 Bajonettverschlüsse zur Herstellung einer zugfesten Verriegelung zweier sich überlappender Rohrstücke bekannt. Das innenliegende Rohr weist dazu an seinem Außenumfang verteilt tangential verlaufende Nasen auf, das außenliegende Rohr an seinem Innenumfang korrespondierende Ausnehmungen. Zum Verbinden der beiden Rohrstücke werden die Rohre axial ineinander gesteckt und verdreht, wobei der Drehwinkel dem Umfangsbogen der Nasen entspricht.

Aufgabe der vorliegenden Erfindung ist die Verkürzung von Ausfallzeiten eines Förderers.

Die Aufgabe wird durch die Merkmale des Anspruchs 1 gelöst. Vorteilhafte Ausgestaltungen der Vorrichtung sind in den Unteransprüchen angegeben.

Die Lösung sieht vor, dass die Vorrichtung Befestigungsmittel umfasst, die zwei nach Art eines Bajonettverschlusses lösbar miteinander verbindbare jeweils eine Durchgangsöffnung aufweisende Verbindungselemente umfassen, von denen eines an der Stirnseite des Motors und das andere am Anschlusselement befestigt ist, wobei die Motorwelle bei den durch Verdrehen und/oder Verschieben miteinander verbundenen Verbindungselementen durch die beiden Durchgangsöffnungen hindurch verläuft, und dass die beiden Verbindungselemente gegen Lösen gesichert sind. Dadurch ergibt sich eine schnelle Montage des Motors. Der Bajonettverschluss umfasst zwei miteinander korrespondierende Verbindungsmittel, wobei das eine mit der Stirnseite des Motors und das andere am Anschlusselement des Förderers bereits vorab montierbar ist. Zur Montage des Motors wird dieser lediglich in Axialrichtung zum Anschlusselement hin bewegt und dann in Umfangsrichtung gedreht. Das Zwischenschalten des Bajonettverschlusses zwischen dem Anlageelement und dem Motor erlaubt also mit nur einem einzigen Drehgriff dessen Befestigung am Förderer, so dass sich die Montage- und Demontagezeiten deutlich senken lassen. Dabei wird der Motor gegenüber dem Anschlusselement und die Motorwelle gegenüber der Antriebswelle jeweils zentrisch ausgerichtet, da die Verbindungselemente die Lage des Motors gegenüber des Anschlusselements vorgeben.

Ein einfacher Bajonettverschluss ist gegeben, wenn eines der Verbindungselemente auf seiner dem gegenüberliegenden Verbindungselement zugewandten Seite Bajonettelemente und das gegenüberliegende Verbindungselement jeweils ein Bajonettelement aufnehmende Aufnahmeöffnungen aufweist, wobei in einer Aufnahmestellung die beiden aneinanderliegenden Verbindungselemente nach Verdrehen und/oder Verschieben eines Verbindungselements in eine Endstellung miteinander verbunden sind, in der jedes Bajonettelement das gegenüberliegende Verbindungselement hintergreift.

Ein einfaches Hintergreifen des anderen Verbindungselements ist gegeben, wenn das vorsprungartige Bajonettelement einen Schaft mit einem an seinem freien Ende angeordneten Schaftkopf aufweist, dessen Querschnitt sich über den Schaft hinaus erstreckt.

Das Zusammenführen der beiden Verbindungselemente vereinfacht sich, wenn jedes einsteckbare Bajonettelement derart ausgeführt ist, dass beim Verdrehen und/oder Verschieben des Verbindungselements in seine Endstellung sich die beiden Verbindungselemente axial aufeinander zu bewegen. Das anfangs vorhandene Spiel in der Aufnahmestellung ermöglicht ein leichtes Verdrehen und/oder Verschieben der beiden Verbindungselementen auch dann, wenn beide Verbindungselemente geringfügig schräg aneinander anliegen.

Der dabei zwischen den beiden Verbindungselementen vorhandene Spalt wird während des Verdrehens und/oder des Verschiebens verringert und geschlossen.

Wenn die auf Seiten des Schafts liegenden ebene Unterseite des Schaftkopfs in Verdrehrichtung und/oder Verschieberichtung geneigt ausgebildet ist, ist für die Aufnahmestellung ein Anfangsspiel gegeben, welches sich während des Verdrehens und/oder Verschiebens der Verbindungselemente verkleinert.

Die analoge Wirkung ist vorhanden, wenn der Schaft konisch und die Aufnahmeöffnungen korrespondierend dazu ausgeführt sind.

Ein Spiel zwischen Bajonettelement und Aufnahmeöffnung kann vorhanden sein und wird während des Verdrehens und/oder Verschiebens in die jeweilige Endstellung reduziert, wenn die dem Schaftkopf jedes eingesetzten Bajonettelements zugewandte Seite des gegenüberliegenden Verbindungselements derart geneigt ist, dass sich die Verbindungselemente axial aufeinander zu bewegen.

Wenn jedes Verbindungselement an seinem Außenumfang ein flanschartiges Anlageelement aufweist, die in der Endstellung der miteinander verbundenen Verbindungselemente aneinander anliegen oder beabstandet einander gegenüberliegen und mittels eines Sicherungsmittels gegen Verdrehen und/oder Verschieben gesichert sind, wird eine Relativbewegung des Motors gegenüber dem Anlageelement und somit ein Verkanten der Motorwelle gegenüber der Antriebswelle des Getriebes auf einfache Weise verhindert.

Der Motor kann mechanisch ohne Werkzeug verdrehsicher und zuverlässig am Förderer befestigt werden, wenn das Sicherungsmittel eine Schraubverbindung mit einer Flügelschraube ist.

Die Erfindung wird nachfolgend anhand einer Zeichnung beschreiben. Es zeigen:
- Fig. 1: Explosionsdarstellung mit einem Motor, zwei Verbindungselementen und einem Anschlusselement,
- Fig. 2: Verbindungselement mit Bajonettelementen gemäß Fig. 1,
- Fig. 3: Verbindungselement mit Aufnahmeöffnungen gemäß Fig. 1,
- Fig. 4: am Motor angeordnete miteinander verbundene Verbindungselemente gemäß Fig. 1,
- Fig. 5: Schnitt gemäß Schnittlinie IV-IV in Fig. 4,
- Fig. 6: Sektorförmiger Ausschnitt eines Verbindungselements mit einer Aufnahmeöffnung.

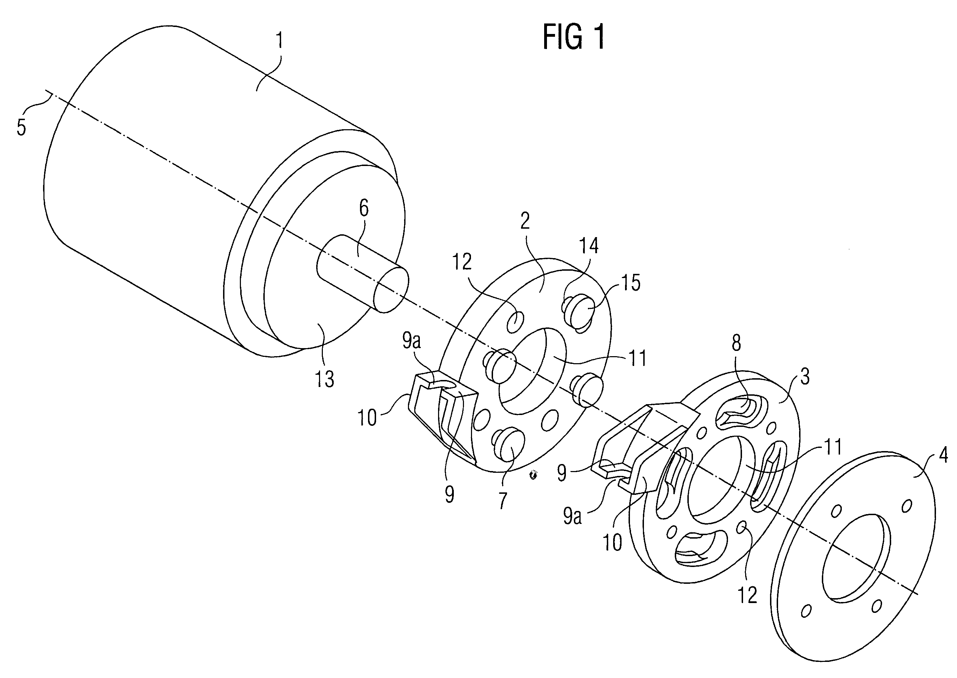

Fig. 1 zeigt in einer Explosionsdarstellung einen Motor 1, zwei den Bajonettverschluss realisierende scheibenförmige Verbindungselemente 2, 3 und ein Anschlusselement 4 eines Förderers, das z.B. an einem Gestellrahmen des Förderers (beide nicht dargestellt) befestigbar ist (vom Gestellrahmen des Förderers ist schematisch nur das Anschlusselement 4 gezeigt). Mit dem Bezugszeichen 5 ist die Rotationsachse der Motorwelle 6 bezeichnet, die an der Stirnseite 13 des Motors 1 austritt.

Mittels durch Bohrungen 12 verlaufende Schrauben ist das Verbindungselement 2 an der Stirnseite 13 des Motors vormontierbar, wobei die Motorwelle 5 durch die Durchgangsöffnung 11 hindurchragt.

Weiter ist das Verbindungselement 3 durch dessen Bohrungen 12 verlaufende Schrauben am Anschlusselement 4 des Förderers vormontierbar.

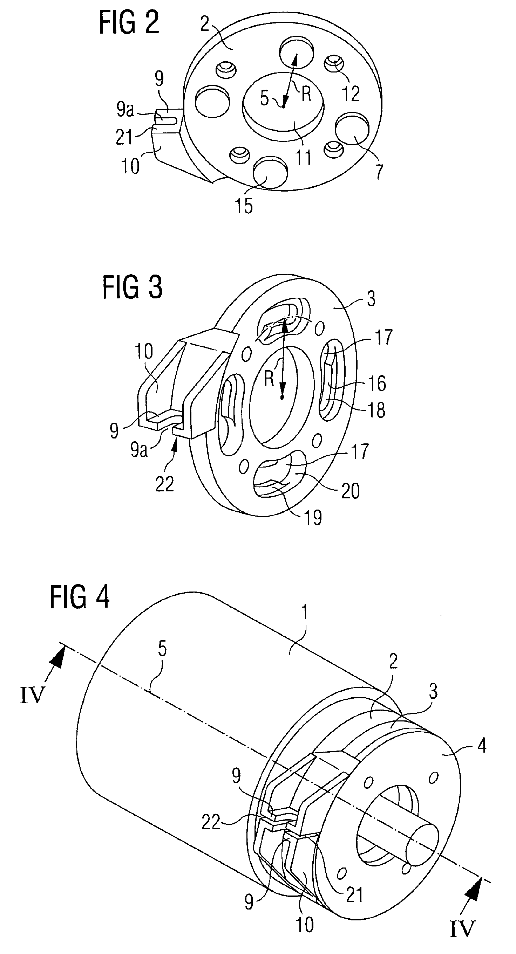

Fig. 2 zeigt das Verbindungselement 2 mit vier koaxial zur Rotationsachse 5 (s. Fig. 1) im gleichen Winkelabstand angeordneten Bajonettelementen 7 in vergrößerter Darstellung. Jedes Bajonettelement 7 ist von der Rotationsachse 5 im gleichen radialen Abstand R entfernt und umfasst einen zylindrischen Schaft 14, an dessen freiem Ende ein zylindrischer Schaftkopf 15 angeordnet ist. Dieser hat einen Durchmesser E, der größer ist als der des Schafts 14.

Zwischen den Bajonettelementen 7 befinden sich die vier koaxial im gleichen Winkelabstand angeordnete Bohrungen 12. Am Außenumfang ragt ein Flansch 9 mit einer Anlagefläche 21 und einer schlitzförmigen Ausnehmung 9a radial hervor, der auf der der Anlagefläche 21 abgewandten Seite mittels Stege 10 beidseitig am Außenumfang abgestützt ist (s. hierzu auch die analogen Stege 10 in Fig. 3).

Fig. 3 zeigt das Verbindungselement 3 gemäß Fig. 1 in perspektivischer vergrößerter Darstellung, wobei die dem Verbindungselement 2 abgewandte Seite gezeigt ist. Das Verbindungselement 3 ist mit einer zentrischen Durchgangsöffnung 11 und vier koaxial angeordneten Bohrungen 12 versehen. Ferner ist am Außenumfang ebenfalls ein sich radial erstreckender Flansch 9 mit einer Anlagefläche 22 angeordnet, der analog zum Flansch 9 des Verbindungselements 2 ausgebildet, d.h. durch Stege 10 abgestützt ist. Gleichfalls ist der Flansch 9 mit einer Ausnehmung 9a versehen.

Weiter sind vier als Langlöcher ausgebildete, zwischen den Bohrungen 12 angeordnete identisch geformte Aufnahmeöffnungen 8 vorgesehen.

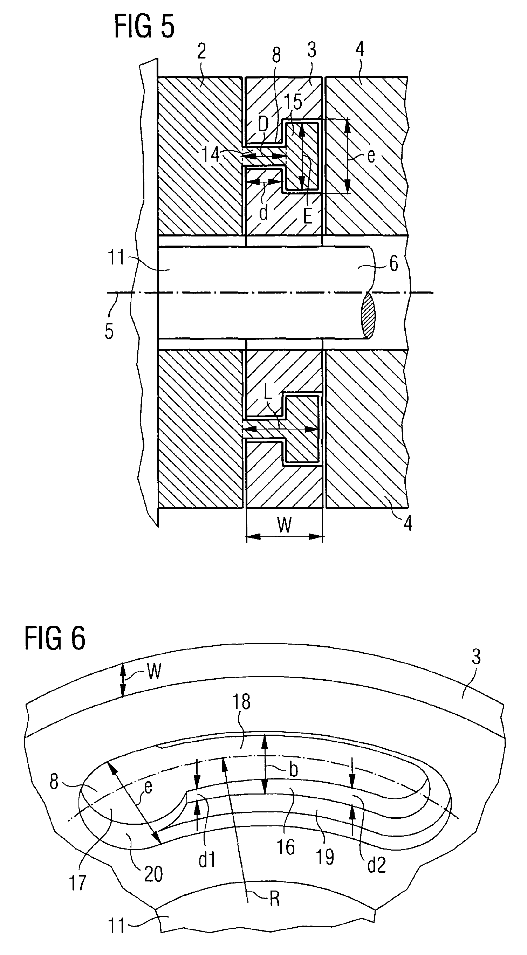

Koaxial und mit dem gleichen radialen Abstand R wie die Bajonettelemente 7 am Verbindungselement 2 sind die vier zugehörigen Aufnahmeöffnungen 8 an dem Verbindungselement 3 angeordnet. Die um die Rotationsachse 5 mit dem radialen Abstand R gekrümmten Aufnahmeöffnungen 8 des Verbindungselements 3 weisen an einem Ende eine kreisförmige Einstecköffnung 17 mit einem Durchmesser e (s. Fig. 5) auf. Alle Aufnahmeöffnungen 8 weisen dabei ihre Einstecköffnungen 17 in Umfangsrichtung gesehen jeweils vorn auf. An der Einstecköffnung 17 der Aufnahmeöffnung 8 grenzt ein Hintergreifbereich 18 an, der sich von dort in Umfangsrichtung längs der Aufnahmeöffnung 8 zum anderem Ende hin erstreckt, mit einer über den gesamten Verlauf gleichbleibenden Breite, die dem Durchmesser e entspricht. Im Hintergreifbereich 18 entlang der Innenseite 20 der langlochförmigen Aufnahmeöffnung 8 verläuft beidseitig ein radialer Steg 16 mit einer Seitenwand 19 als Hinterschneidung, der die langlochförmige Öffnung derart verkleinert, dass diese die Breite b aufweist.

Zum Montieren des Motors 1 am Förderer werden die jeweils vormontierten Verbindungselemente 2, 3 in eine Lage gebracht, in der die Bajonettelemente 7 den Einstecköffnungen 17 der Aufnahmeöffnung 8 gegenüberliegen. Anschließend wird der Motor 1 axial in Richtung des Verbindungselements 3 bewegt, bis die beiden Verbindungselemente 2, 3 in ihrer Aufnahmestellung aneinander anliegen und die Bajonettelemente 7 in die Einstecköffnungen 17 hineinragen. Durch Verdrehen des Motors 1 im Uhrzeigersinn bis in eine Endstellung hintergreifen die Schaftköpfe 15 die Stege 16 der Aufnahmeöffnungen 8, so dass der Motor 1 am Förderer befestigt ist. Dabei liegen die beiden Flansche 9 mit ihren Anlagenflächen einander gegenüber, so dass diese mittels einer Flügelschraube als Sicherungselement, die in die Ausnehmungen 9a eingelegt wird, miteinander verbunden werden können. Dies sichert die beiden Verbindungselemente 2, 3 und folglich den Motor 1 am Förderer gegen ein Verdrehen und Lösen.

Die Demontage des Motors 1 erfolgt entsprechend in umgekehrten Reihenfolge.

Fig. 4 zeigt die am Motor 1 montierten Elemente aus Fig. 1 in ihrer Endstellung, jedoch ohne das Sicherungselement. Die am Außenumfang der Verbindungselemente 2, 3 angeordneten Flansche 9 liegen dabei einander gegenüber.

Fig. 5 zeigt einen Schnitt gemäß der Schnittlinie IV-IV in Fig.4. Das Verbindungselement 2 ist an den Motor 1 und das Verbindungselement 3 an das Anschlusselement 4 geschraubt. Die beiden Verbindungselemente 2, 3 sind in ihrer Endstellung verdrehfest miteinander verbundenen. Das Bajonettelement 7 hintergreift mit seinem Schaftkopf 15 den Steg 16 der Aufnahmeöffnung 8 des Verbindungselements 3, so dass die beiden Verbindungselemente 2, 3 miteinander verhakt sind. Die Seitenwand 19 des Stegs 16 dient dabei als Anlagefläche für die Schaftseite des Schaftkopfs 15.

Die Wandstärke W des Verbindungselements 3 in Axialrichtung der Motorwelle 6 ist gleich oder größer als die Länge L des Bajonettelementes.

Fig. 6 zeigt in perspektivischer Darstellung einen sektorförmigen Ausschnitt des Verbindungselements 3 mit der Aufnahmeöffnung 8 in einer weiteren Ausgestaltung. Die Aufnahmeöffnung 8 ist hierbei langlochförmig und mit dem Radius R gekrümmt ausgebildet und weist an ihrem linken Ende die kreisförmige Einstecköffnung 17 auf. Der Durchmesser e der Einstecköffnung 17 entspricht dabei im wesentlichen dem Durchmesser E des Schaftkopfs 15, so dass das Bajonettelement 7 dort einsteckbar ist.

An der Einstecköffnung 17 der Aufnahmeöffnung 8 schließt sich der Hintergreifbereich 18 an und erstreckt sich über die restliche Länge der Aufnahmeöffnung 8. Im gesamten Hintergreifbereich 18 verläuft beidseitig der Steg 16, der eine verbleibende Öffnung mit einer zum Durchmesser des Schafts 14 korrespondierende Breite b aufweist (s. auch Fig. 5). Die Wandstärke d₁ des Steges 16 auf Seiten der Einstecköffnung 17 ist so gewählt, dass der vorsprungartige Schaftkopf 15 des Bajonettelements 7 den Steg 16 mit Spiel hintergreift, d.h. die Wandstärke d₁ des Stegs 16 ist kleiner als die Schaftlänge D des Bajonettelements 7. Die Wandstärke d₂ des Stegs 16 am gegenüberliegenden Ende der Aufnahmeöffnung 8 entspricht dagegen genau der Länge D des Schafts 14. Dies ist ein sich in Verdrehrichtung verbreiternder Steg 16, so dass während des Verdrehens des Verbindungselements 2 im Uhrzeigersinn (oder der beiden Verbindungselemente 2, 3 gegeneinander) in die Endstellung die beiden Verbindungselemente 2, 3 axial zusammen gezogen werden. Ein in der Aufnahmestellung zwischen den beiden Verbindungselementen 2, 3 befindlicher Spalt wird somit beim Drehen in der Endstellung geschlossen.

## Patentansprüche

1. Vorrichtung zum lösbaren Befestigen eines Motors (1) an einem Anschlusselement (4) eines Förderers, insbesondere eines Antriebsmotors,
umfassend Befestigungsmittel, mittels derer der Motor (1) abtriebsseitig am Anschlusselement (4) befestigt ist,
**dadurch gekennzeichnet,**
**dass** die Befestigungsmittel zwei nach Art eines Bajonettverschlusses (7) lösbar miteinander verbindbare jeweils eine Durchgangsöffnung(11) aufweisende Verbindungselemente (2, 3) umfassen, von denen eines an der Stirnseite des Motors (13) und das andere am Anschlusselement (4) befestigt ist,
wobei die Motorwelle (6) bei den durch Verdrehen und/oder Verschieben miteinander verbundenen Verbindungselementen (2, 3) durch die beiden Durchgangsöffnungen (11) hindurch verläuft, und dass die beiden Verbindungselemente (2, 3) gegen Lösen gesichert sind.

2. Vorrichtung nach Anspruch 1,
**dadurch gekennzeichnet,**
**dass** eines der Verbindungselemente (2, 3) auf seiner dem gegenüberliegenden Verbindungselement (2, 3) zugewandten Seite Bajonettelemente (7) und das gegenüberliegende Verbindungselement (2, 3) jeweils ein Bajonettelement (7) aufnehmende Aufnahmeöffnungen (8) aufweist,
wobei in einer Aufnahmestellung die beiden aneinanderliegenden Verbindungselemente (2, 3) nach Verdrehen und/oder Verschieben eines Verbindungselementes (2, 3) in eine Endstellung miteinander verbunden sind, in der jedes Bajonettelement (7) das gegenüberliegende Verbindungselement (2, 3)hintergreift.

3. Vorrichtung nach einem der Ansprüche 1 bis 2,
**dadurch gekennzeichnet,**
**dass** das vorsprungartige Bajonettelement (7) einen Schaft (14) mit einem an seinem freien Ende angeordneten Schaftkopf (15) aufweist, dessen Querschnitt sich über den Schaft (14) hinaus erstreckt.

4. Vorrichtung nach einem der Ansprüche 2 bis 3,
**dadurch gekennzeichnet,**
**dass** jedes einsteckbare Bajonettelement (7) derart ausgeführt ist, dass beim Verdrehen und/oder Verschieben des Verbindungselementes (2, 3) in seine Endstellung sich die beiden Verbindungselemente (2, 3) axial aufeinander zu bewegen.

5. Vorrichtung nach Anspruch 4,
**dadurch gekennzeichnet,**
**dass** die auf Seiten des Schafts (14) liegende ebene Unterseite des Schaftkopfs (15) in Verdrehrichtung und/oder Verschieberichtung geneigt ausgebildet ist.

6. Vorrichtung nach Anspruch 4 oder 5,
**dadurch gekennzeichnet,**
**dass** der Schaft (14) konisch und die Aufnahmeöffnungen korrespondierend dazu ausgeführt sind.

7. Vorrichtung nach einem der Ansprüche 4 bis 6,
**dadurch gekennzeichnet,**
**dass** die dem Schaftkopf (15) jedes eingesetzten Bajonettelementes (7) zugewandte Seite des gegenüberliegenden Verbindungselements (2, 3) derart geneigt ist, dass sich die Verbindungselemente (2, 3) axial aufeinander zu bewegen, während diese gegeneinander in ihre Endstellung verdreht und/oder verschoben werden.

8. Vorrichtung nach einem der Ansprüche 1 bis 7,
**dadurch gekennzeichnet,**
**dass** jedes Verbindungselement (2, 3) an seinem Außenumfang ein flanschartiges Anlageelement aufweist, die in der Endstellung der miteinander verbundenen Verbindungselemente (2, 3) einander anliegen oder beabstandet einander gegenüberliegen und mittels eines Sicherungsmittels gegen Verdrehen und/oder Verschieben gesichert sind.

9. Vorrichtung nach Anspruch 8,
**dadurch gekennzeichnet,**
**dass** das Sicherungsmittel eine Schraubverbindung mit einer Flügelschraube ist.
